(19) Europäisches Patentamt
European Patent Office
Office européen des brevets

(11) **EP 4 083 744 A1**

(12) **EUROPEAN PATENT APPLICATION**

(43) Date of publication:
**02.11.2022 Bulletin 2022/44**

(21) Application number: **21382382.6**

(22) Date of filing: **30.04.2021**

(51) International Patent Classification (IPC):
*G05F 1/20* (2006.01)    *H02J 3/18* (2006.01)
*H02J 3/38* (2006.01)    *H02P 13/06* (2006.01)
*H02M 5/12* (2006.01)    *H02M 1/08* (2006.01)

(52) Cooperative Patent Classification (CPC):
**H02M 1/08; G05F 1/20; H02J 3/1878; H02J 3/381;
H02M 5/12; H02P 13/06;** H02J 2300/28

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **SGRE-Association
Siemens Gamesa Renewable
Energy GmbH & Co KG
Schlierseestraße 28
81539 München (DE)**

(54) **TAP CHANGING FOR A POWER TRANSFORMER**

(57)    A control system configured to control the switching of taps (25-27) of an on-load tap changer (30) provided on an electric power transformer (20) is provided. The on-load tap changer (30) comprises switches (32) that are controllable to switch between transformer taps. The control system (10) comprises a detector (12) configured to detect an indication of a zero crossing of a transformer voltage of the transformer (20) and a control signal generator (13) configured to generate a control signal that controls a switching of the switches (32) for performing a tap change to a new transformer tap. The control signal generator (13) is configured to determine the timing of the control signal for changing the transformer tap (25-27) based on the detected indication of the zero crossing of the transformer voltage such that the switching of at least one of said switches (32) for performing the tap change occurs a predetermined time (71) prior to a zero crossing of a tap voltage at the new transformer tap, the predetermined time (71) being less than 40% of the duration of an electrical period of the tap voltage.

FIG 4

**Description**

FIELD OF THE INVENTION

The present invention relates to a control system configured to control the switching of taps of an electronic on-load tap changer provided on an electric power transformer, in particular on a wind turbine transformer. The invention further relates to a respective electronic on-load tap changer and to a wind turbine electrical power system including such tap changer. A method of operating an electronic on-load tap changer is further provided.

BACKGROUND

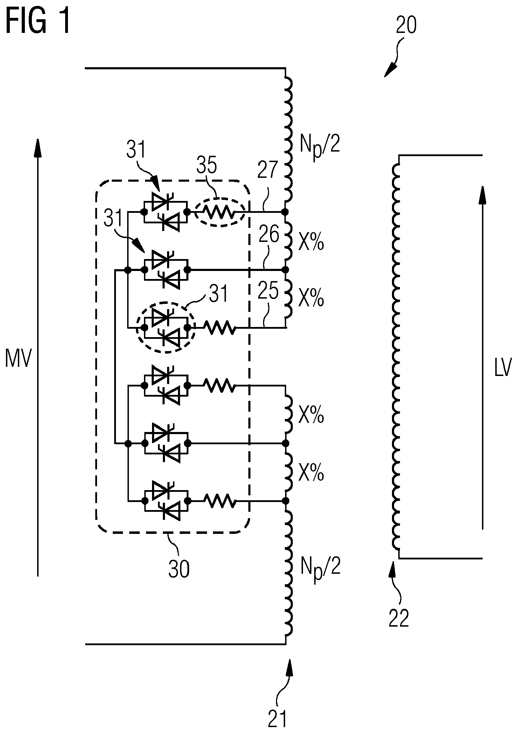

A wind turbine is generally connected to a power grid, which can be a local wind farm grid or a utility grid, via a respective wind turbine transformer. The electrical power system of the wind turbine, which for example comprises for a variable speed wind turbine a generator and a power converter, e.g. in a full converter topology or a DFIG topology, experiences voltage variations on the power grid which are transmitted through the transformer. Undesirable over-voltage or under-voltage conditions may thus be experienced by the wind turbine electrical power system.
To solve this problem, document WO 2020/239425 A1 describes the use of an electronic on-load tap changer, preferably on the primary winding of the wind turbine transformer. By changing the tap setting, voltage variations on the power grid can thus be compensated. An exemplary configuration is shown in Fig. 1, wherein the wind turbine transformer 20 includes a primary winding 21 provided with tap changer 30 and a secondary winding 22. Switching valves 31 are connected to each tap and can be controlled for switching for example between taps 25, 26 and 27. In view of the high short circuit currents that may occur when connecting two taps via switching valves 31, changeover impedances 35, such as inductors and/or resistors are provided that lower the short circuit current peak value during tap change. However, such solution is not optimal, for example due to the volume and cost of the required impedances. Another possibility is the over-sizing of the thyristors, the installation of snubber circuits or the like. However, they suffer from similar drawbacks and increase the costs. The short circuit current peak further affects the lifetime of the transformer and of the thyristors due to mechanical and thermal effects of such currents.

SUMMARY

Accordingly, there is a need to mitigate at least some of the drawbacks mentioned above and to provide an improved switching for such on-load tap changer, for example for a wind turbine transformer.
This need is met by the features of the independent claims. The dependent claims describe embodiments of the invention.
According to an embodiment of the invention, a control system configured to control the switching of taps of an on-load tap changer of an electronic power transformer is provided. The electronic on-load tap changer comprises switches that are controllable to switch between transformer taps. The control system comprises a detector configured to detect an indication of a zero crossing of a transformer voltage of the transformer and a control signal generator configured to generate a control signal that controls a switching of the switches for performing a tap change to a new transformer tap. The control signal generator is configured to determine the timing of the control signal for changing the transformer tap based on the detected indication of the zero crossing of the transformer voltage such that the switching of a switch for performing the tap change (in particular of each switch of the new tap required for performing the tap change) occurs a predetermined time prior to a zero-crossing of a tap voltage at the new transformer tap. The predetermined time is preferably less than 40% of the duration of an electrical period of the tap voltage.
As the respective switch of the new tap is closed prior to the zero-crossing of the voltage, short circuit currents that occur during the tap changing process can be minimized. At the zero-crossing of the voltage, all taps connected to the same transformer winding have substantially the same low voltage value, so that short circuiting two taps during the tap changing process only results in currents that are significantly lower than the peak currents of a conventional tap changing process. Further, if switching occurs shortly after the zero crossing of the voltage, the short circuit current through the new tap and the 'old' tap (i.e. the tap to be disconnected) may keep the switch of the old tap closed, which can result in high short circuit currents even if switching occurs very close to the voltage zero crossing. This is avoided by performing the switching prior to the zero crossing.
It should be clear that for a transformer, if the zero crossing of one of the transformer voltages is known, be it on the primary or the secondary side, or of only one phase of a three-phase system, the zero crossing at each of the transformer terminals and at each tap can generally be derived due to the known phase relationships. Accordingly, if one zero crossing is detected, e.g. by measuring the phase, the voltage zero crossing at each transformer tap may be determined. Therefore, the transformer voltage used to detect the zero crossing does not need to be the same as the tap voltage (for example, measuring at a secondary side of the transformer and switching a tap on a primary side of the transformer). Also, the transformer voltage does not need to be measured directly at the transformer, but can be for example measured on an electrical connection towards the transformer at another electric component connected to the transformer, since the phase will generally be the same. Should any elements or intervening components be present in such connection which cause a shift of the phase, such phase shift can then be taken into account for determining the zero-crossing of the tap voltage. Such phase shifts are either known or may be determined in a calibration. The zero crossing of the tap voltage may accordingly be derived by the control signal generator from the indication of the zero crossing of the transformer voltage.

In particular, the control signal may be generated such that the switching of at least one switch for connecting the new tap is performed at the predetermined time prior to the zero crossing. The switching of the at least one switch may thus comprise a closing of the at least one switch, in particular of a switching valve, that is connected to the new tap.

The control signal may further cause a switching of one or more switches for disconnecting the old tap after the switching for connecting the new tap, in particular by opening or allowing an opening of a respective switch connected to the old tap (e.g. by removing a trigger or triggering order that keeps the switch closed, or by actively driving a switch into a blocking state), e.g. a switching valve. The switching for disconnecting the old tap may be performed within a second predetermined time before or after the zero crossing of the tap voltage, wherein the second predetermined time is preferably smaller than the predetermined time prior to the zero crossing at which the new tap is connected. In other words, the switching for the old tap may occur closer to the zero crossing than the switching of the new tap.

'Old tap' may refer to the tap that is to be disconnected during the tap change, wherein 'new tap' may refer to the tap that is to be connected into the circuit during the tap change. In particular, the current through the respective transformer winding is changed from flowing through the old tap to flowing through the new tap by the tap change.

The control signal generator may be configured to generate the control signal such that a switch connected to the old tap (e.g. a switching valve) is allowed to open a changeover period of time after the connecting of the new tap, i.e. the closing of the switch connected to the new tap. The changeover period of time may lie in the range of 0.01 ms to 12 ms, 0.1 to 8 ms, or 0.1 to 6 ms. In an example, the changeover period lies in the range of 0.1 to 4ms or 0.2 to 1.5 ms, it may for example be about 1 ms.

The control signal generator may generate the control signal so as to open or allow to open the at least one switch connected to the old tap at a zero crossing of a current (in particular the short circuit current) through the old tap (e.g. by sending a respective trigger or ceasing to send a respective trigger to the switch, depending on the type of switch). While some switches, such as a thryistor, may open upon the short circuit current dropping below a holding current, other switches (e.g. IGBT) may be opened actively at such zero crossing by a respective control signal (e.g. by ceasing to supply a trigger order to the switch at the occurrence of the zero crossing). The expression 'at the zero crossing' may naturally include a short time period before and after the current zero crossing, e.g. 1 ms, 0.5 ms or 0.25 ms before and after the current zero crossing.

The control system may further be configured to monitor a current through a tap to be changed (in particular the old tap and/or the new tap). Based on such monitoring, the zero crossing of the current can be detected so that the old tap may be disconnected at such zero crossing of the current.

The one or more switches connected to the old tap may be allowed to open by the control signal causing that a respective driving signal is no longer supplied to the one or more switches (e.g. a switching valve), in particular by causing that no trigger (e.g. gate voltage/current or light signal) is applied to a gate of such switch. The control signal may cause the switch to open by not sending a respective pulse or signal that keeps the semiconductor switch in a closed state. For example in case of a thyristor, the switch may open upon a current through the closed switch falling below a holding current (which is close to a zero crossing of the current) in the absence of a gate current. It should be clear that the switch may not immediately open after ceasing to supply a gate voltage/current or triggering light signal, but may only open after the current through the switch has dropped sufficiently. Accordingly, a short circuit current through the old tap and the new tap during the tap change may last longer than the changeover period. The changeover period in particular lasts from the trigger for closing the switch associated with the new tap to the trigger for opening the switch associated with the old tap during the tap change.

In an exemplary implementation, the predetermined time at which the switching of at least one of said switches for performing the tap change (in particular for connecting the new tap) occurs is selected from a range of 30%, preferably 25%, 15%, 10% or 7%, of the electrical period of the tap voltage prior to the zero crossing (e.g. 5% for a 50 Hz grid and 6% for a 60 Hz grid). The range may extend up to the time of the zero crossing but may not include the zero crossing (as the switching occurs prior to the zero crossing). For a 50 Hz voltage signal, the electrical period is 20 ms, and for a 60 Hz voltage signal, the electrical period is 16.7 ms. For example, the predetermined time at which the switching occurs may lie within a range of 8 ms to 0.01 ms prior the zero crossing, preferably 5 ms to 0.01 ms or 3 ms to 0.1 ms, more preferably 2 ms to 0.2 ms. For example, the switching for the at least one switch may occur within the range of 1.5 ms to 0.5 ms prior to the zero crossing, e.g. at about 1 ms. By such timing of the switching of the at least one switch, it can be ensured that peak short circuit currents are sufficiently low.

The detector may comprise or may be a phase detector. It may include a phase-locked loop (PLL) that detects the phase of the transformer voltage. Such PLL is a proven technology that provides a precise phase determination and that can be implemented cost-efficiently. It is however also conceivable to detect an indication of a zero crossing of the transformer voltage in a different way, for example by detecting a certain rate of change of the transformer voltage signal, detecting a dropping of the transformer voltage signal below a value and the like, for example by sampling the voltage signal sufficiently fast and predicting the zero crossing based on a known waveform of the voltage. However, a higher accuracy and simpler implementation may be achieved by employing a phase detector.

The indication of the zero crossing, in particular the phase, may be detected by measuring a voltage on a higher voltage side (primary side) of the transformer or a lower voltage side (secondary side) of the transformer, and/or on any winding on the transformer, e.g. on a tap winding. Preferably, it is measured on the lower voltage side. The detector may comprise a measurement unit that is configured to measure the transformer voltage on the respective transformer side. It may in particular measure a phase to ground voltage or a line-line voltage.

In an exemplary implementation, the control system further comprises a converter control unit that is configured to control a power converter coupled to the transformer. Such converter control unit (CCU) may for example control a converter coupled to a rotor of a doubly-fed induction generator, or a converter of a full converter solution that is for example connected to a permanent magnet synchronous generator.

The control signal generator may for example be configured to receive from the CCU a tap change signal and to generate the control signal based on the tap change signal. In a wind turbine, the CCU generally has available high-speed and high-precision voltage measurements, which are required to perform the converter control. Accordingly, such CCU can detect overvoltages or under-voltages fast and efficiently and can provide a respective tap change signal if a tap change is required to keep the voltage on the lower voltage side (i.e. the transformer secondary side) of the wind turbine power system stable. A fast and efficient implementation can thereby be achieved, in particular in view of the synergy obtained by such a way of generating a tap change signal. The CCU can take respective voltage measurements on the secondary side of the transformer, e.g. at the LV connection of the converter towards the transformer.

In an example, the control system may comprise a tap changer controller that is physically separate and distinct from the converter control unit, wherein the detector and the control signal generator form part of the tap changer controller. A relatively simply setup may thus be achieved, which may also be retrofitted to existing wind turbine power systems. Furthermore, a communication connection may be provided between the converter control unit and the tap changer controller to provide the above-mentioned tap change signal from the CCU to the control signal generator. No further modifications to the CCU would accordingly be necessary. Such communication connection may for example be implemented as a controller area network (CAN) bus connection, an Ethernet connection, or any other type of suitable communication connection.

The converter control unit may for example include a phase-locked loop (PLL) configured to detect the phase of the transformer voltage (e.g. of the low-voltage on the secondary side), wherein the converter control unit controls the power converter based on the detected phase. This may for example occur in accordance with any known scheme, such as vector control or direct torque control. The control system may be configured to compare the phase detected by the phase-locked loop of the converter controller with a phase detected by the detector of the tap changer controller. It should be clear that the detected indication of the zero crossing of the transformer voltage is indicative of the phase and that the detector may also be a PLL. Discrepancies in the phase detection may thereby be identified. For example, it can be confirmed that both, the PLL of the CCU and the detector of the control system operate synchronously. This may of course be performed for each phase of a three-phase voltage. An enhanced accuracy may thereby be achieved, and errors may be detected reliably.

In another example, the converter control unit may include a phase-locked loop configured to detect the phase of the transformer voltage (e.g. on the secondary side of the transformer), the converter control unit controlling the power converter based on the detected phase. The detector of the control system may be provided by or implemented by the phase-locked loop of the converter control unit. Accordingly, the same PLL may be used in the control of the power converter and in the generation of the control signal for the tap changer. A compact and cost-efficient solution may thereby be achieved. Also, hardware resources may be saved.

The control signal generator may also be implemented in the CCU. For example, the CCU including the detector in form of the PLL and the control signal generator, and possibly a driver unit, may be provided in the same cabinet in a wind turbine, for example in a converter cabinet of the power converter, or even on the same circuit board. It should be clear that other configurations are conceivable, such as for example providing the driver unit separately, e.g. at the on-load tap changer, or providing the control signal generator and the driving unit in a separate controller.

In general, the transformer may be a three-phase transformer, and the control system may be configured to provide the control signal such that the tap changing for each phase of the three-phase transformer is performed at the predetermined time prior to the zero-crossing of the voltage of the respective phase. As the three phases of a three-phase system are generally offset by 120°, the control signal for switching a semiconductor switch to effect the tap change for each phase may accordingly also be offset in time between each phase by 1/3 of the voltage period. The at least one semiconductor switch for each phase of the three-phase system may accordingly be switched prior to the zero-

crossing of the tap voltage of the respective phase, thereby significantly reducing the short circuit currents for each phase during the tap change. It should be clear that the control of the switching for each phase may be independent from the other phases; the indication of the zero crossing may for example be detected independently for each phase of the transformer, for example by using a separate PLL for each phase.

The control signal generator may be configured to predict a future zero-crossing of the voltage at the new transformer tap based on the detected indication of the zero crossing and to generate the control signal such that it includes a trigger (e.g. switching pulse or signal) for switching the semiconductor switch to perform the tap change prior to the predicted zero-crossing. It should be clear that as the voltage signal is a periodic signal (e.g. 50 Hz or 60 Hz, depending on the power grid), the next zero-crossings can be predicted precisely once the phase of the voltage signal is detected by the detector.

The control signal generator may further be configured to generate the control signal so as to account for a delay, in particular for a delay introduced by generating the control signal and/or providing a driving signal by a driver unit to the at least one semiconductor switch. Considering a delay that may be due to the signal processing and signal transmission may ensure that the switching of the at least one semiconductor switch occurs at the predetermined time.

In another exemplary implementation, the control system may be configured to perform a measurement of the transformer voltage waveform for detecting an indication of a zero crossing, and to perform the switching of the at least one semiconductor switch for performing the tap change if the measured instantaneous transformer voltage drops to a voltage level smaller than 60% of a voltage peak amplitude of the transformer voltage waveform, preferably smaller than 50%, 40%, or 35% of the voltage peak amplitude of the transformer voltage waveform. The voltage can for example be sampled by detector or by the CCU with sufficient sampling speed, e.g. at the lower voltage secondary side of the transformer. At 1 ms prior to the zero crossing, the voltage may for example have a value of about 30% of the voltage peak amplitude.

The on-load tap changer is preferably an electronic on-load tap changer. Such tap changer may allow a fast switching of the taps.

The switches may be semiconductor switches. This allows a fast switching between taps. The switches may for example be thyristors. In other examples, the switches may be semiconductor switches such as IGBTs (insulated gate bipolar transistors), IGCTs (integrated gate-commutated thyristor), MOSFETs (metal-oxide-semiconductor field-effect transistors), or triacs. In other exemplary implementations, the switches may be electro-mechanical switches.

Preferably, the switches are light-triggered thyristors (LTTs). Accordingly, a high degree of electrical isolation can be achieved between the transformer voltages and the control circuits.

The on-load tap changer may include a switching valve (also termed "power valve") connected to each tap. Each switching valve may comprise or consist of one or a pair of the switches, which may be connected anti-parallel (e.g. thyristor) or in anti-series (e.g. IGBT, IGCT or MOSFET) in the switching valve, depending on the type of switch. Two anti-parallel connected thyristors are preferred, as they allow a fast switching and can handle high currents. In other exemplary implementations, each switching valve may comprise or consist of a bidirectional switch or a triac.

The control system may include a driver unit configured to drive the switches in accordance with the control signal. Such driver unit may provide the control signal of the required properties (electrical or optical) to the switches.

The control signal that is generated by the control signal generator may in particular indicate which of the switches are to be closed and which are to be open. The drive signal of the driver unit may include the respective inputs to a control terminal (e.g. gate) of the switches to drive them into the respective state, e.g. into an on-state or off-state. It may for example apply respective gate pulses for triggering the on-state of a thyristor, or a respective light signal that drives the thyristor into an on-state.

The control signal generator may be implemented in digital form, for example as a DSP (digital signal processor) or ASIC (application specific integrated circuit), and the driver unit may include a respective digital-to-analogue converter for generating pulses or a continuous signal for driving the thyristors. It may also be implemented in hardware by means of field programmable gate arrays (FPGAs). When using light-triggered thyristors, the driver unit may comprise an optical driver unit that provides a respective optical drive signal to the light-triggered thyristors.

The transformer may have one or more primary windings and one or more secondary windings, wherein taps may be provided on either of such windings. The transformer may also be an autotransformer. Such types of transformers benefit from a respective on-load tap changer.

According to a further embodiment of the invention, an on-load tap changer is provided that comprises plural switches connected to transformer taps of an electric power transformer, wherein the switches are controllable to switch between transformer taps, a driver unit, and a control system having any of the configurations described herein, wherein the driver unit is connected to the switches and configured to drive the switches in accordance with a control signal received from the control signal generator. Such tap changer may provide an easier integration, as less components, such as changeover impedances, are required and as the lifetime of the switches and of the transformer can be improved without requiring an over-sizing or any special designs of the switches in view of the reduced short circuit currents occurring during the tap change.

The switches may for example provide plural switching valves, each switching valve having a first terminal connected to a transformer tap and a second terminal connected to another switching valve, wherein the connection between each switching valve and the transformer tap is a direct connection that does not comprise a changeover impedance. Further, the connection between the switching valve and the other switching valve may be a direct connection that does not comprise a changeover impedance. Accordingly, when closing the switches connected to two such taps, the resulting circuit may only include the intrinsic tap resistance and the inductance of the transformer winding section between the taps. However, in view of the control of the switches, the short circuit current can be kept small. It should be clear that the switching valve does also not include any additional impedance, i.e. no changeover impedance, and that no changeover impedance may be provided in the tap changer, i.e. for none of the taps.

The switching valves may be connected to the transformer taps and to other switching valves such that when switching from a transformer tap to a neighboring transformer tap, the transformer tap is short circuited with the neighboring transformer tap via the respective switching valves during the tap change. Accordingly, there may be no additional intervening impedances, resistances, inductances or the like connected between the old tap and the new tap when performing a tap change (only intrinsic ones may be present). The transformer may thus operate more efficiently and less components are required. It should be clear that in other implementations, changeover impedances (e.g. connected to at least some taps, e.g. to every second or third tap) may be provided to further reduce the short circuit current during a tap change.

According to a further embodiment of the present invention, a wind turbine electrical power system is provided, which comprises a wind turbine transformer and an on-load tap changer provided on the wind turbine transformer. The on-load tap changer can have any of the configurations described herein. Such transformer does not need to be specially designed or reinforced to have a desired lifetime, e.g. 25 years or more, since with the switching performed by the tap changer, short circuit currents and thus loads on the electric components may be minimized.

According to a further embodiment of the invention, a method of operating an on-load tap changer provided on an electric power transformer is provided. The on-load tap changer comprises switches that are controllable to switch between transformer taps, wherein the method comprises the steps of detecting an indication of a zero crossing of a transformer voltage of the transformer, and generating a control signal that controls the switches for performing a tap change to a new transformer tap. When generating the control signal, the timing of the control signal for changing the transformer tap is determined based on the detected indication of the zero crossing of the transformer voltage such that the switching of at least one of the switches for performing the tap change occurs a predetermined time prior to a zero-crossing of a tap voltage at the new transformer tap. The predetermined time is preferably less than 25% of the duration of a period of the tap voltage. By such method, advantages similar to the ones outlined further above may be achieved.

The method may further include driving the switches in accordance with the control signal, e.g. by means of a respective driving unit.

It should be clear that the method may be carried out with the control system in any of the configurations described herein. Further, the control system may be configured to perform any of the disclosed method steps.

It is to be understood that the features mentioned above and those yet to be explained below can be used not only in the respective combinations indicated, but also in other combinations or in isolation, without leaving the scope of the present invention. In particular, the features of the different examples and embodiments of the invention can be combined with each other unless noted to the contrary.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Fig. 1    is a schematic drawing showing a tap changer that employs changeover impedances for limiting short circuit currents during the tap change.

Fig. 2    is a schematic drawing showing a wind turbine and a wind turbine electrical power system including an onload tap changer and a control system according to an exemplary implementation of the invention.

Fig. 3    is a schematic drawing that schematically illustrates the currents occurring during a tap change in the system of figure 2.

Fig. 4    is a schematic drawing that shows a section of figure 3 in more detail.

Fig. 5    is a schematic drawing showing a control system according to an exemplary implementation of the invention.

Fig. 6 is a schematic drawing showing a control system according to another exemplary implementation of the invention.

Fig. 7 is a diagram illustrating the voltage waveform of a tap voltage and further a short circuit current occurring during a tap change as well as the points in time at which the semiconductor switches of the tap changer may be switched.

Fig. 8 is a diagram illustrating the voltage waveform and further the short circuit currents occurring during the tap change when switching at different times.

Fig. 9 is a flow diagram illustrating a method of operating a tap changer in accordance with an exemplary implementation of the invention.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

Hereinafter, an exemplary implementation of the disclosed solutions in a wind turbine electrical power system is described for the purpose of illustration; it should however be clear that the disclosed solutions may also be implemented in other environments (e.g. distribution grids, substation transformers, photovoltaic applications, railway applications and the like), in which a fast and efficient tap changing is beneficial. Furthermore, the examples are provided for switches in form of semiconductor switches. The teachings disclosed herein may however also be applied to other types of switches, such as electro-mechanical switches.

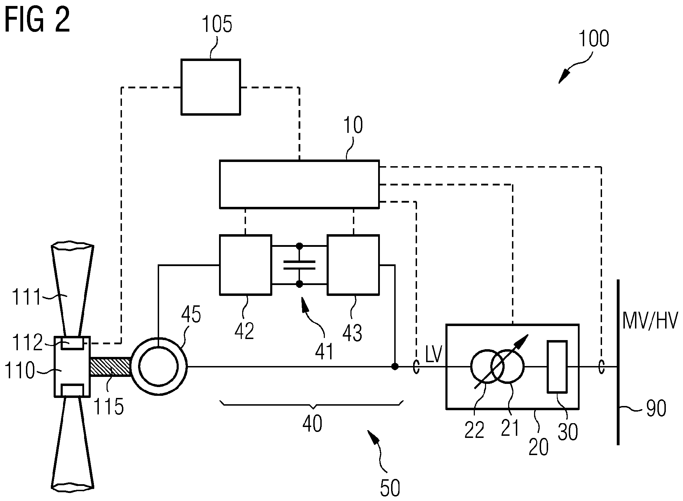

Fig. 2 schematically illustrates a wind turbine 100 including a wind turbine rotor with a hub 110 and rotor blades 111. An electrical power system 50 of the wind turbine may include a wind turbine transformer 20 and a power converter 40, and may further include a generator 45. In the present example, generator 45 is a doubly-fed induction generator the stator of which is coupled via wind turbine transformer 20 to power grid 90, whereas the rotor is connected to the power converter 40. In other implementations, a full converter solution having a different kind of generator 45, such as a permanent magnet synchronous generator that is connected to power grid 90 through a respective power converter can be provided, in which essentially all of the generated power flows through the power converter. The generator 45 may be coupled to the rotor hub 110 using shaft 115, and possibly an intervening gearbox (not shown). The wind turbine rotor may be provided with a blade pitch drive 112 controlled by wind turbine controller 105.

A control system 10 is furthermore provided which in some implementations may include a converter control unit (CCU) that controls the power converter 40 (as shown in the example of Fig. 2), and may in other implementations not comprise such converter control unit (i.e. the CCU may be provided separately). Wind turbine transformer 20 includes primary winding 21, which is a higher voltage winding connected to power grid 90, which may be medium voltage (MV) or high voltage (HV) grid. It further includes a secondary winding 22, which may be a lower voltage winding receiving low voltage (LV) electrical power or medium voltage power (MV) from generator 45 and/or converter 40. LV typically refers to a voltage range of up to 1.000 V. Transformer 20 further includes the electronic on-load tap changer 30 that in the example of Fig. 2 is provided on the primary winding 21, yet may in other implementations also be provided on the secondary winding 22. It should be clear that transformer 20 may comprise plural secondary windings (e.g. one connected to generator 45, the other to converter 40). Power system 50 may be a three-phase power system comprising conductors for reach phase, and power grid 90 generally operates at a voltage frequency of 50 Hz or 60 Hz.

The control system 10 may measure a transformer voltage on the LV side and/or the MV/HV side of the transformer 20 to determine the occurrence of a voltage zero crossing, e.g. by measuring a phase of the transformer voltage, and may in accordance therewith control the operation of the tap changer 30, as explained in more detail further below.

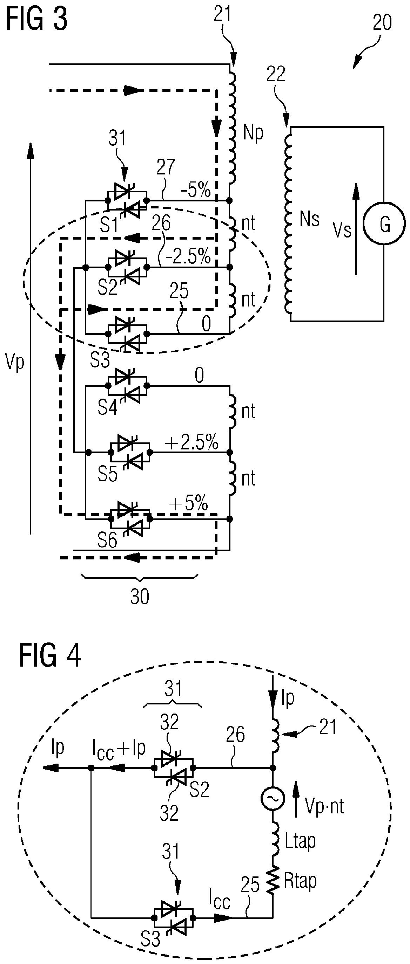

Fig. 3 illustrates the transformer winding 21 comprising exemplary taps 25, 26, 27. Tap changer 30 may include a switching valve 31 connected to each tap. Each switching valve may consist of two semiconductor switches 32 (Fig. 4). Semiconductor switches 32 are preferably thyristors (electrically triggered or light-triggered) that are connected anti-parallel. With each tap, a certain fraction nt of turns can be connected into the current path or taken out of the current path through the primary winding 21. As generally known, the transformation ratio of transformer 20 depends on the turns ratio ($N_P/N_S$) of the primary and secondary windings 21, 22, so that by changing the taps (and thus the number of turns in winding 21), the transformation ratio ($V_P/V_S$) and thus the voltage $V_S$ on the secondary side can be adjusted. Fig. 3 illustrates exemplary percentages of the voltage increase or voltage decrease when connecting the respective taps. The thick dashed line indicates the primary current $I_P$ occurring during a tap change between taps 25 and 26, which is illustrated in more detail in Fig. 4.

Fig. 4, which shows an enlarged section of Fig. 3, illustrates the situation in which the switching valves 31 connected to taps 25 and 26 (i.e. valves S3 and S2) are closed during a tap changing between these taps (e.g. from 26 to 25). In order not to interrupt the current, both taps are closed at a certain point in time, which is illustrated in Fig. 4. The primary current $I_P$ through the primary winding mainly flows through tap 26 and the connected switching valve S2, as this tap corresponds to the smaller number of turns. However, as both switching valves S2 and S3 are closed, and as current is still induced in the winding section between taps 25 and 26, a short circuit current $I_{CC}$ exists between the short circuited taps 25 and 26. Tap 26 and the connected switching valve S2 accordingly experience $I_{CC}+I_P$, whereas the tap 25 and the connected switching valve S3 experience mainly $I_{CC}$.

It is preferred that no changeover impedance, such as an additional resistor or inductance, is connected to any of the taps 25-27 to limit such short circuit current $I_{CC}$. Rather, only the intrinsic tap resistance Rtap and inductance Ltap of the primary winding section between the taps is present in the circuit. The voltage induced across taps 25 and 26 is $V_P*nt$, $V_P$ being the primary voltage and nt being the fraction of turns of the primary winding section between taps 25 and 26 (i.e. nt herein refers to the percentage of turns of the respective winding, i.e. the number of turns between the taps divided by the total number of turns Np of the primary winding). Accordingly, as the intrinsic tap resistance is rather low, $I_{CC}$ can become very large. The instantaneous short circuit current can be calculated from the equation

$$nt*V_P(t) = Rtap * I_{CC}(t) + Ltap * dI_{CC}/dt$$

As described above with respect to Fig. 1, previous solutions have employed changeover impedances connected to the transformer taps to limit the short circuit current. The present solution may avoid such changeover impedances and reduce high short circuit currents $I_{CC}$ by appropriately controlling the instant of the switching of switching valves 31.

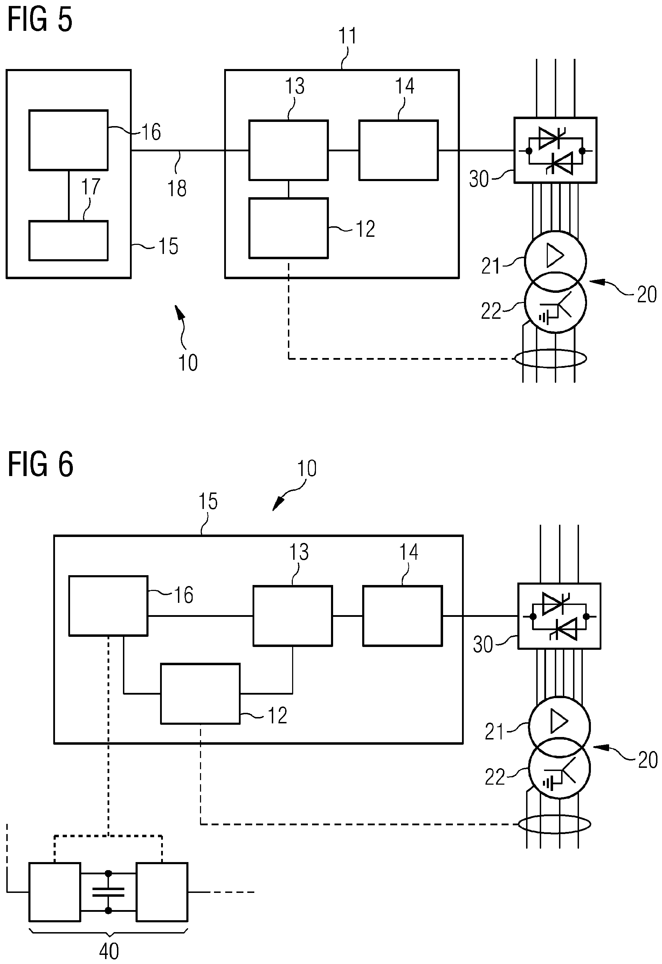

Fig. 5 illustrates a first exemplary implementation of the control system 10, wherein the control system 10 includes a dedicated and separate tap changer controller 11. It includes a detector 12, which may be a phase detector that detects a phase of a transformer voltage, such as a phase of $V_P$ or of $V_S$. It may include respective voltage sensors. As illustrated in Fig. 5, the measurement is preferably performed on the secondary side of transformer 20, as such low voltages are easier to measure and thus simplify the controller configuration; the voltage may however alternatively be measured on the primary side of the transformer. It should be clear that the measurement does not need to be performed directly at the transformer terminal, but may be performed at a different position in the power system 50, for example at the converter 40. Further, it should be clear that the system is a three-phase system, and that the phase angle of one phase of the three-phase voltage may be detected by detector 12, upon which the phase angle of the other two voltages can be derived. The phase angle of two or of three of the voltages may alternatively be detected. Preferably, the detector 12 implements or is a phase-locked loop (PLL), while other implementations are conceivable. The detected phase is indicative of the zero crossings of the transformer voltage.

Control signal generator 13 uses the detected phase to generate a control signal for switching the semiconductor switches of switching valves 31 to effect a desired tap change. From the measured phase, the control signal generator 13 may derive the phase of the tap voltage at the taps of tap changer 30 (which may be the same as the measured phase). The tap changer is in the example of Fig. 5 provided on the primary winding 21 of transformer 20. Control signal generator 13 now generates the control signal with a timing such that the switching of one or more semiconductor switches that effect the tap change occurs prior to a zero-crossing of the tap voltage of the taps on the respective transformer winding. It should be clear that in general, there is a fixed phase relationship between the phase of the primary voltage $V_P$ and the secondary voltage $V_S$, which is generally the same or phase shifted by 180° (which does not change the zero-crossing). Accordingly, based on the detected phase on the secondary side, control signal generator 13 can reliably determine when the voltage on the primary side and thus at the tap to be changed has a zero-crossing. It is noted that if any change of the phase of the transformer voltage occurs between the position where the tap changer 30 is connected and where the detector 12 detects the phase of the transformer voltage, such change may be considered by the control signal generator 13, for example based on a priori knowledge of such phase shift or, preferably, based on a respective calibration. Such shift may for example result from a transformer load.

The control signal is then provided to a driver unit 14 which drives the one or more semiconductor switches to perform the tap change. In the example of Fig. 4, when changing from tap 26 to tap 25, this may for example include first connecting the new tap 25 by supplying a respective drive signal to the semiconductors 32 of valve S3 (e.g. a trigger pulse or signal supplied to the gate of a thyristor), and disconnecting thereafter tap 26, e.g. by ceasing to supply a respective drive signal to switching valve S2 connected to tap 26 (e.g. stopping the supply of a pulse or signal to the thyristor gate). During a changeover period of time, the valves S3, S2 connected to the new tap and the old tap, respectively, are closed and may accordingly be supplied with a respective drive signal from drive unit 14.

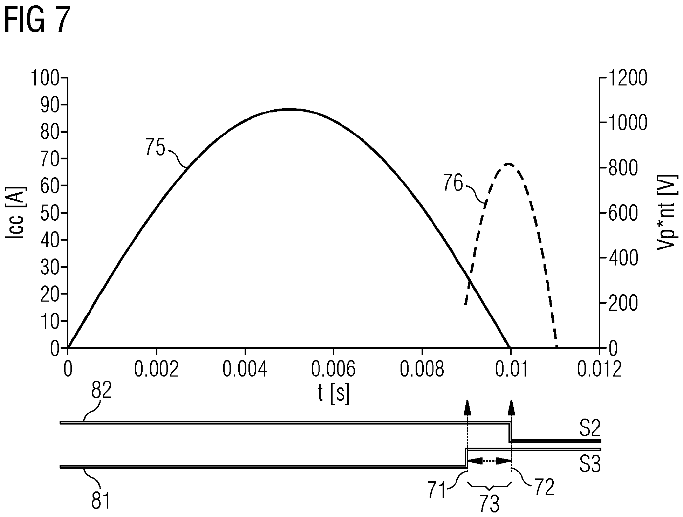

Figure 7 shows a diagram that illustrates the waveform of the tap voltage 75 and of the short circuit current $I_{CC}$ 76, as well as an exemplary control signal that includes control signals 81 and 82 which control the valves S2 and S3 of figure 4, respectively. The 50 Hz waveform of the tap voltage has a zero crossing at a time t = 0.01 s. For changing from tap 26 to tap 25, the valve S3 connected to the new tap 25 is closed at a predetermined time 71 prior to the zero crossing, which in the present example is 1 ms (as can be taken from control signal 81). As can further be seen, the control signal 82 still causes the supply of a drive signal to the valve S2 connected to the old tap 26, so that both valves are closed and both taps are short circuited during the changeover period 73. Accordingly, the short circuit current $I_{CC}$ flows, which is caused by induction in the short circuited winding section. $I_{CC}$ is accordingly inductive and is generally significantly higher that then operating current of the transformer. $I_{CC}$ accordingly lags the tap voltage by about 90 degrees. $I_{CC}$ thus reaches its peak at about the voltage zero crossing. By closing switching valve S3 shortly prior to the zero crossing, $I_{CC}$ can be kept small.

After the changeover period (1 ms in the present example), the valve S2 connected to the old tap is allowed to open at a second predetermined time 72, which is close to the zero crossing. As indicated by control signal 82, this may occur by no further providing a respective signal to the valve S2, e.g. by not providing a trigger (e.g. voltage, current, or light) to the gate of the semiconductor switches of valve S2. The short circuit current is however not interrupted immediately, since the switching valve S2 remains closed (i.e. conducting) until the current through the valve S2 has a zero crossing. As soon as this occurs, the switching valve will open (i.e. not conducting) and the short circuit current $I_{CC}$ is interrupted, so that the old tap is no longer connected. As the level of $I_{CC}$ is thus symmetrical about the transformer voltage zero crossing, the time during which $I_{CC}$ is present and the $I_{CC}$ amplitude can be adjusted by setting the predetermined time 71 at which the switching valve connected to the new tap is closed prior to the zero crossing.

When implementing the valve 31 or switch 32 differently, for example by means of a triac, an electro-mechanical switch or an connection of two IGBTs, IGCTs, or MOSFETS, the situation might be different. For example, opening the switch may then directly interrupt the short circuit current. The second predetermined time 72 may then be chosen such that the switch is opened at a zero-crossing of the short circuit current through the old tap, i.e. the tap to be disconnected. The valve S2 or a respective switch may for example be opened at the zero crossing of curve 76, which occurs at about 0.011 s. The changeover period 73 may then last from the first predetermined time 71 prior to the voltage zero crossing to the second predetermined time 72 at the short circuit current zero crossing. A respective current measurement may be made, e.g. at the winding or at one or more taps, on a bus connecting the switches of the tap changer or the like. The current that needs to be interrupted when disconnecting the old tap may thus be reduced significantly. It should be clear that as this is a physical system, the switching will not occur exactly at the current zero crossing, but might occur slightly before or after the current zero crossing, e.g. within ±0.5 ms or ±0.25 ms or ±0.1 ms of the current zero crossing.

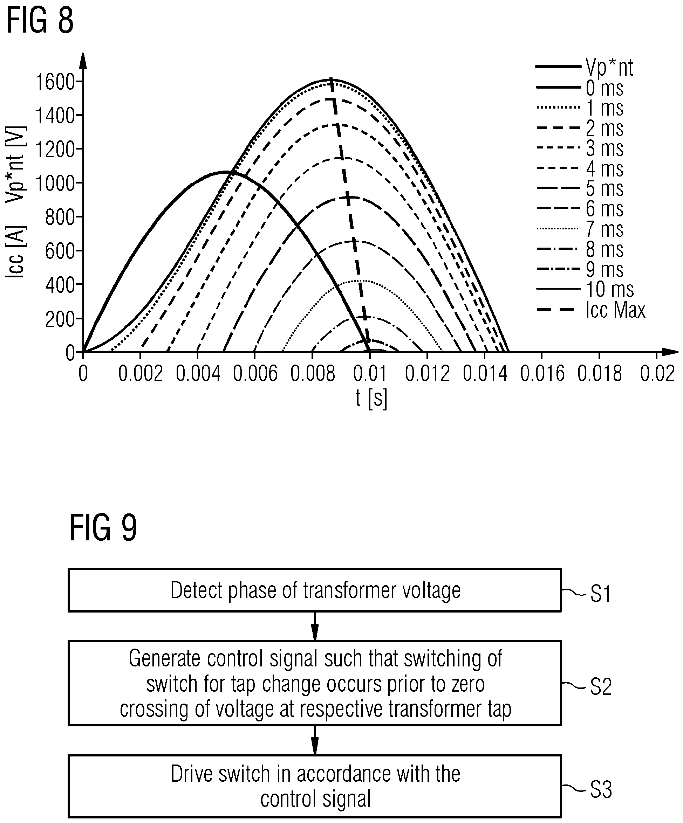

The diagram of Fig. 8 illustrates the short circuit currents $I_{CC}$ that result from a respective switching between taps. The vertical axis shows both, the short circuit currents $I_{CC}$ in units of A and the voltage at the tap $V_P$*nt in units of V. The example is for a 50 Hz voltage waveform, and the thick solid line indicates the tap voltage having zero-crossings at 0, 0.01 s and 0.02 s, similar to figure 7. The thin lines indicate short circuit current $I_{CC}$ that is caused by closing the switching valve connected to the new tap at different times prior to the tap change, which are indicated in the legend. As can be seen, if the switching valve is closed a long time prior to the zero-crossing occurring at 0.01 s, the short circuit current $I_{CC}$ rises to high values, up to 1.600 A in the present example. On the other hand, if the switching valve is switched closer to the zero-crossing at 0.01 s, the maximum short circuit current is reduced significantly. The thick dashed line indicates how the peak value of $I_{CC}$ behaves for the different timing of the switching of valve 31 prior to the zero crossing. It is noted that the $I_{CC}$ line for switching the valve at 0 ms (rounded) relates to a switching that occurred shortly after the zero crossing of the tap voltage at t = 0 ms, and that the $I_{CC}$ line for switching the valve at 10 ms (rounded) relates to a switching that occurred shortly prior to the zero crossing of the tap voltage at t = 0.01 s.

Preferably, the closing of the one or more semiconductor switches of the new tap (e.g. the closing of the switching valve) occurs within 25% of the period of the voltage waveform prior to the zero crossing (which for the example of 50 Hz is within 5 ms prior to the zero crossing). At such switching time, the maximum $I_{CC}$ can already be reduced by almost 50%. More preferably, switching occurs within 15%, 10% or 7% of the period prior to the zero crossing, for example within 4ms, 2ms or even 1.5 ms prior to the zero-crossing of the tap voltage. As can be seen in Fig. 8, the peak of $I_{CC}$ when switching 2 ms prior to the zero-crossing is only about 200 A, and thus only 12.5% of the peak value when switching at 10 ms prior to the zero-crossing, and it may be even less than 100 A when switching at 1 ms prior to the zero crossing, as also shown in figure 7.

Turning back to figure 5, driver unit 14 may be an electric driver unit that provides an electric drive signal, such as pulses or a continuous signal, to the semiconductor switches of tap changer 30, or may be an optical drive unit that provides a drive signal in form of light, e.g. via an optical fiber, to light-triggered semiconductor switches, such as light-triggered thyristors. The latter implementation allows an efficient separation and electrical isolation of the controller circuits from the MV/HV voltages of primary winding 21. Fig. 5 further illustrates a converter controller unit 15 that is configured to control the power converter 40 and in particular to provide driving signals to respective semiconductor switches of the power converter 40. CCU 15 comprises a respective controller circuit 16 and a phase-locked loop 17 that detects the phase on the secondary side of transformer 20, i.e. the low voltage side, to provide respective control (e.g. to ensure that electric power induced in the stator of DFIG 45 is synchronous with the grid frequency). CCU 15 measures the voltage on the low voltage side and may accordingly determine when a tap change is required, for example when the voltage drops below a respective threshold or rises above a respective threshold. A respective communication connection 18 may accordingly be provided between the CCU 15 and the tap changer controller 11 over which a tap change command can be issued by CCU 15. In response, the control signal generator 13, receiving the tap change command, may generate a control signal to effect the desired tap change. Such tap change command may for example indicate that a tap change of one or more taps up or down should occur.

Communication connection 18 may for example be a CAN bus connection, an Ethernet connection, a serial bus connection, an optical fiber connection (in particular CAN optical fiber), or the like.

In some implementations, the CCU 15 may form part of the control system 10. In other implementations, CCU 15 may not be comprised in control system 10. The example of Fig. 5 provides a solution in which the tap changer controller 11 is separate and distinct from CCU 15 and can thus be easily retrofitted into an existing wind turbine.

Fig. 6 illustrates a modification of the system of Fig. 5, so that the above explanations are equally applicable. In the system of Fig. 6, the tap changer controller is integrated in the CCU 15, which accordingly forms part of the control system 10. The control circuit 16 may now in a similar manner provide a tap change command to the control signal generator 13. However, as the respective circuits are provided in the same unit and may even be provided on the same circuit board, fast and efficient communication can be implemented. Furthermore, detector 12 may be implemented by the PLL 17 of CCU 15. The PLL may accordingly provide the phase angle of the transformer voltage both to the control circuit 16 for controlling the power converter 40 and to the control signal generator 13 for generating the control signal for the tap change. A compact configuration with fewer components can thus be achieved.

Fig. 9 illustrates a flow diagram of a method that may be performed by the control system 10 in any of the configurations described herein. In step S1, the phase of the transformer voltage is detected, and in particular the zero-crossing of the transformer voltage is detected. In step S2, the control signal is generated by control signal generator 13 such that the switching of the at least one switch for performing the tap change occurs prior to a zero-crossing of a voltage at the respective transformer tap, in particular a predetermined time prior to such zero crossing, e.g. within 40% of the duration of the transformer voltage period, preferably within 8, 5 or 2 ms prior to the zero crossing. In step S3, the one or more switches are driven in accordance with the control signal. Switching one or more switches to effect the tap change may in particular comprise the closing of a first switching valve connected to the new tap to which the tap change is to occur while a second switching valve connected to the old tap (which is to be disconnected) may be kept closed during a changeover period. It may further include the opening of the second switching valve to disconnect the old tap.

By the solution described herein, several advantages may be achieved. For example, by switching the semiconductor switches for effecting the tap change less than 5 ms, or less than 2 ms prior to the zero-crossing of the tap voltage, a significant reduction of the short circuit current may be achieved, e.g. from 1.600 A to less than 100 A in the example of Fig. 8. $I_{CC}$ may for example be reduced to less than 10% of its maximum value. This may result in less demanding transformer and thyristor requirements. In particular, mechanical and thermal effects may be reduced significantly with such lower short circuit currents. Furthermore, as no overlap impedances or snubber circuits may be required, the integration into a wind turbine is facilitated. The transformer and the thyristors may not need to be specially designed and reinforced in order to provide a possible lifetime of 25 years or more.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A control system configured to control the switching of taps (25-27) of an electronic on-load tap changer (30) provided on an electric power transformer (20), wherein the on-load tap changer (30) comprises switches (32) that are controllable to switch between transformer taps, wherein the control system (10) comprises:

   - a detector (12) configured to detect an indication of a zero crossing of a transformer voltage of the transformer (20); and
   - a control signal generator (13) configured to generate a control signal that controls a switching of the switches (32) for performing a tap change to a new transformer tap,

wherein the control signal generator (13) is configured to determine the timing of the control signal for changing the transformer tap (25-27) based on the detected indication of the zero crossing of the transformer voltage such that the switching of at least one of said switches (32) for performing the tap change occurs a predetermined time (71) prior to a zero crossing of a tap voltage at the new transformer tap, the predetermined time (71) being less than 40% of the duration of an electrical period of the tap voltage.

2. The control system according to claim 1, wherein the predetermined time (71) at which the switching of at least one of said switches (32) for performing the tap change occurs is selected from a range of 30%, preferably 25%, 15%, 10% or 7%, of the electrical period of the tap voltage prior to the zero crossing.

3. The control system according to claim 1 or 2, wherein the detector (12) comprises or is a phase detector.

4. The control system according to any of the preceding claims, wherein the switching of the at least one switch at the predetermined time (71) prior to the zero crossing comprises the closing of at least one switch connected to the new tap, and wherein the control signal generator generates the control signal so as to open or allow to open at least one switch connected to an old tap a changeover period of time (73) after said predetermined time, the old tap being a tap to be disconnected during the tap change.

5. The control system according to claim 4, wherein the changeover period of time (73) lies within a range of 0.01 ms to 12 ms, or within a range of 0.1 to 8 ms, or within a range of 0.1 to 6 ms, and/or wherein the control signal generator generates the control signal so as to open or allow to open the at least one switch connected to the old tap at a zero crossing of a short circuit current through the old tap.

6. The control system according to any of the preceding claims, wherein the control system (10) further comprises a converter control unit (15) that is configured to control a power converter (40) coupled to the transformer (20).

7. The control system according to claim 6, wherein the control system (10) comprises a tap changer controller (11) that is physically separate and distinct from the converter control unit (15), wherein the detector (12) and the control signal generator (13) form part of the tap changer controller (11) .

8. The control system according to claim 7, wherein the converter control unit (15) includes a phase locked loop (17) configured to detect the phase of the transformer voltage, the converter control unit (15) controlling the power converter (40) based on the detected phase, wherein the control system (10) is further configured to compare the phase detected by the phase locked loop (17) of the converter controller (15) with a phase detected by the detector (12) of the tap changer controller (11).

9. The control system according to claim 6, wherein the converter control unit (15) includes a phase locked loop (17) configured to detect the phase of the transformer voltage, the converter control unit (15) controlling the power converter (40) based on the detected phase, wherein the detector (12) is provided by the phase locked loop (17) of the converter control unit (15).

10. The control system according to any of the preceding claims, wherein the control signal generator (13) is configured to predict a future zero crossing of the voltage at the new transformer tap based on the detected indication of the zero crossing and to generate the control signal such that it includes a trigger at the predetermined time prior to the predicted zero crossing for switching the at least one switch for changing the tap.

11. The control system according to any of the preceding claims, wherein switches (32) are at least one of semiconductor switches, thyristors, light triggered thyristors, insulated gate bipolar transistors, integrated gate-commutated thyristors, or metal-oxide-semiconductor field-effect transistors.

12. An on-load tap changer, comprising:

- plural switches (32) connected to transformer taps (25-27) of an electric power transformer (20), wherein the switches (32) are controllable to switch between transformer taps;
- a driver unit (14); and
- a control system (10) according to any one of the preceding claims, wherein the driver unit (14) is connected to the switches (32) and is configured to drive the switches in accordance with a control signal received from the control signal generator.

**13.** The on-load tap changer according to claim 12, wherein the switches (32) comprise switching valves (31), the switching valves (31) being connected to the transformer taps (25-27) and to other switching valves (31) such that when switching from a transformer tap (25) to a neighboring transformer tap (26), the transformer tap (25) is short circuited with the neighboring transformer tap (26) via the switching valves (31) connected to the respective taps during the tap change.

**14.** A wind turbine electrical power system (50) comprising a wind turbine transformer (20) and an on-load tap changer (30) provided on the wind turbine transformer (20), wherein the on-load tap changer (30) is configured in accordance with claim 12 or 13.

**15.** A method of operating an on-load tap changer (30) provided on an electric power transformer (20), wherein the on-load tap changer (30) comprises switches (32) that are controllable to switch between transformer taps (25-27), wherein the method comprises the steps of:

- detecting an indication of a zero crossing of a transformer voltage of the transformer (20); and
- generating a control signal that controls the switches (32) for performing a tap change to a new transformer tap,

wherein when generating the control signal, the timing of the control signal for changing the transformer tap is determined based on the detected indication of the zero crossing of the transformer voltage such that the switching of at least one of the switches (32) for performing the tap change occurs a predetermined time (71) prior to a zero crossing of a tap voltage at the new transformer tap, the predetermined time (71) being less than 40% of the duration of an electrical period of the tap voltage.

# FIG 1

FIG 2

# FIG 3

# FIG 4

FIG 5

FIG 6

# FIG 7

FIG 8

FIG 9

| Detect phase of transformer voltage | ~ S1 |

| Generate control signal such that switching of switch for tap change occurs prior to zero crossing of voltage at respective transformer tap | ~ S2 |

| Drive switch in accordance with the control signal | ~ S3 |

Europäisches
Patentamt

European
Patent Office

Office européen
des brevets

# EUROPEAN SEARCH REPORT

Application Number

EP 21 38 2382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOUSEF-ZAI F Q ET AL: "Solid-state on-load transformer tap changer", IEE PROCEEDINGS: ELECTRIC POWER APPLICATIONS, INSTITUTION OF ELECTRICAL ENGINEERS, GB, vol. 143, no. 6, 11 November 1996 (1996-11-11), pages 481-491, XP006006415, ISSN: 1350-2352, DOI: 10.1049/IP-EPA:19960578 | 1-5, 11-13,15 | INV. G05F1/20 H02J3/18 H02J3/38 H02P13/06 H02M5/12 H02M1/08 |
| Y | * figures 2,3,6,17 * <br> * pages 481-487 * <br> * page 485 * <br> * page 486 * <br> ----- | 6-10,14 | |
| X | US 10 727 755 B2 (REINHAUSEN MASCHF SCHEUBECK [DE]) 28 July 2020 (2020-07-28) | 1-5,11, 12,15 | |
| A | * figures 1,2a,2b,3,5a,5b,6,7,8,17 * <br> * column 1, lines 19-21 * <br> * column 6, lines 43-63 * <br> * column 10 - column 16, line 46 * <br> ----- | 6-10,14 | |
| Y,D | WO 2020/239425 A1 (SIEMENS GAMESA RENEWABLE ENERGY INNOVATION & TECHNOLOGY SL [ES]) 3 December 2020 (2020-12-03) * figure 1 * ----- | 6-9,14 | TECHNICAL FIELDS SEARCHED (IPC) <br><br> H02M H02P G05F H02J |
| Y | US 10 124 680 B1 (BARTOLOME JORDI TOST [ES] ET AL) 13 November 2018 (2018-11-13) * figures 3,6 * ----- | 10 | |

The present search report has been drawn up for all claims

| Place of search | Date of completion of the search | Examiner |
|---|---|---|
| Munich | 4 October 2021 | Zettler, Karl-Rudolf |

EPO FORM 1503 03.82 (P04C01)

**ANNEX TO THE EUROPEAN SEARCH REPORT**
**ON EUROPEAN PATENT APPLICATION NO.**                    EP 21 38 2382

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2021

| Patent document cited in search report | | Publication date | Patent family member(s) | | Publication date |
|---|---|---|---|---|---|
| US 10727755 | B2 | 28-07-2020 | CN | 109983681 A | 05-07-2019 |
| | | | EP | 3327911 A1 | 30-05-2018 |
| | | | JP | 2020500392 A | 09-01-2020 |
| | | | RU | 2019119398 A | 24-12-2020 |
| | | | US | 2020136607 A1 | 30-04-2020 |
| | | | WO | 2018095782 A1 | 31-05-2018 |
| WO 2020239425 | A1 | 03-12-2020 | EP | 3742251 A1 | 25-11-2020 |
| | | | WO | 2020239425 A1 | 03-12-2020 |
| US 10124680 | B1 | 13-11-2018 | CN | 109130916 A | 04-01-2019 |
| | | | DE | 102018207197 A1 | 03-01-2019 |
| | | | US | 10124680 B1 | 13-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020239425 A1